# FASCICULE DE BREVET EUROPEEN

(11) **EP 0 342 070 B1**
(45) Date de publication et mention de la délivrance du brevet: **04.08.1993**
(21) Numéro de dépôt: 89401002.4
(22) Date de dépôt: 12.04.1989
(51) Int. Cl.: H02B 1/04

(54) **Dispositif de manoeuvre du mécanisme de clipsage des appareils électriques modulaires**
Vorrichtung zum Manövrieren des Klemmechanismus modularer elektrischer Geräte
Device for manoeuvering the clipping mechanism of a modular electrical apparatus

(30) Priorité: 06.05.1988 FR 8806107
(43) Date de publication de la demande: 15.11.1989
(73) Titulaire: HAGER ELECTRO S.A., F-67210 Obernai (FR)
(72) Inventeur: Lehning, Guy, F-67100 Strasbourg (FR)
(74) Mandataire: Bernasconi, Jean

(56) Documents cités:
- EP-A- 0 168 714
- FR-A- 2 087 657

## Description

L'invention concerne un dispositif de manoeuvre du mécanisme de clipsage dus appareils électriques modulaires, mécanisme de clipsage qui est destiné à faciliter la mise en place desdits appareils sur un rail de support et leur retrait de ce rail et qui comporte un loquet et un organe élastique de rappel tel qu'un ressort.

Le loquet, constitué habituellement de matériaux plastiques ou métalliques, comprend le plus souvent un oeillet déporté par rapport à la base de l'appareil et permettant la manoeuvre de ce loquet, soit manuellement, soit à l'aide d'un outil approprié tel qu'un tournevis. On connaît un loquet de ce type d'après le EP-A-0 168 714.

Lorsque l'on veut actionner le loquet afin de libérer l'appareil électrique d'un rail, on se trouve confronté à des difficultés. Il s'agit notamment de l'accessibilité souvent difficile du loquet et, dans le cas notamment d'un loquet à oeillet déporté par rapport à la base de l'appareil, de l'abscence d'une zone de dégagement permettant le débattement approprié du loquet.

Dans le brevet français FR-A-2 087 657, des éléments de circuit sont conçus pour être montés sur un rail de support par des moyens totalement différents de ceux décrits dans EP-A-0 168 714. Il ne s'agit plus d'un loquet, mais de prolongements latéraux du boîtier, présentant une certaine élasticité et se terminant chacun par une protubérance. Ces protubérances sont conçues pour s'engager sous les bords retournés du rail de support et être serrées élastiquement contre le rail lors de la mise en place convenable d'un élément de verrouillage en forme de bague, coulissant autour du boîtier.

L'invention a pour but de remédier aux inconvénients des dispositifs de clipsage à loquet des appareils électriques modulaires, en fournissant un dispositif permettant la manoeuvre du loquet même dans des conditions d'accessibilité difficile et d'absence de zone de dégagement.

Un autre objectif de l'invention est de fournir un dispositif qui soit simple, peu encombrant et peu onéreux.

L'invention a pour objet un dispositif de manoeuvre du mécanisme de clipsage des appareils électriques modulaires, mécanisme de clipsage qui est destiné à faciliter la mise en place desdits appareils sur un rail de support et leur retrait de ce rail et qui comporte un loquet et un organe élastique de rappel tel qu'un ressort, dispositif caractérisé en ce qu'il comprend un coulisseau qui est disposé au voisinage du côté de l'appareil situé sensiblement à la perpendiculaire du loquet et qui est mobile de façon orthogonale par rapport à la direction de déplacement du loquet, coulisseau qui présente une partie active agencée de façon à coopérer avec le loquet par un dispositif à rampe et à provoquer, contre l'action du ressort de rappel, un déplacement du loquet dans le sens de sa libération par rapport au rail de support lorsque le coulisseau est déplacé dans un sens convenable.

De préférence, le dispositif à rampe vient coopérer avec une partie du loquet tournée vers l'extérieur et est situé sensiblement dans l'alignement du susdit côté de l'appareil.

Le dispositif à rampe du coulisseau vient de préférence coopérer avec un oeillet rectangulaire porté par le loquet. On comprend donc que, lors du déplacement du coulisseau dans un sens convenable, celui-ci va venir coulisser dans l'oeillet rectangulaire du loquet et, par effet de rampe, provoquer le déplacement du loquet dans le sens de sa libération par rapport au rail de support.

De préférence, le coulisseau présente, à l'opposé de sa partie active, une face d'appui, de préférence légèrement saillante par rapport au côté de l'appareil, destinée à recevoir la pression d'actionnement du coulisseau. Une disposition légèrement saillante par rapport au côté de l'appareil permet une meilleure accessibilité du coulisseau pour son actionnement à l'aide d'un outil approprié tel qu'un tournevis.

Dans un mode de réalisation particulier, le coulisseau présente, en fin de rampe, une surface qui est orthogonale à la direction de déplacement du loquet et qui est en contact avec l'oeillet lorsque ledit loquet est suffisamment dégagé du rail de support. En l'absence d'un actionnement du coulisseau en sens inverse, l'action du ressort de rappel maintient ledit contact, ce qui fait que le loquet reste dégagé, permettant ainsi une dépose aisée de l'appareil. Par contre, en l'absence de cette surface parallèle ou de moyens équivalents, le coulisseau revient en position de repos grâce à la pression exercée par le ressort de rappel du loquet.

L'invention va être décrite maintenant plus en détail à l'aide d'exemples non limitatifs et se référant au dessin annexé dans lequel :
la figure 1 représente une vue partielle en coupe du boîtier d'un appareil électrique modulaire comportant un dispositif de clipsage de un dispositif de manoeuvre selon l'invention, en position de repos ;
la figure 2 représente une vue en perspective du coulisseau de la figure 1 avec représentation partielle en coupe du côté de l'appareil ;
la figure 3 représente une vue analogue à la figure 1 montrant l'actionnement du coulisseau ;
les figures 4 et 5 sont des vues analogues respectivement aux figures 1 et 3, dans lesquelles le coulisseau présente un épaulement destiné à l'accrochage du loquet en position écartée du rail.

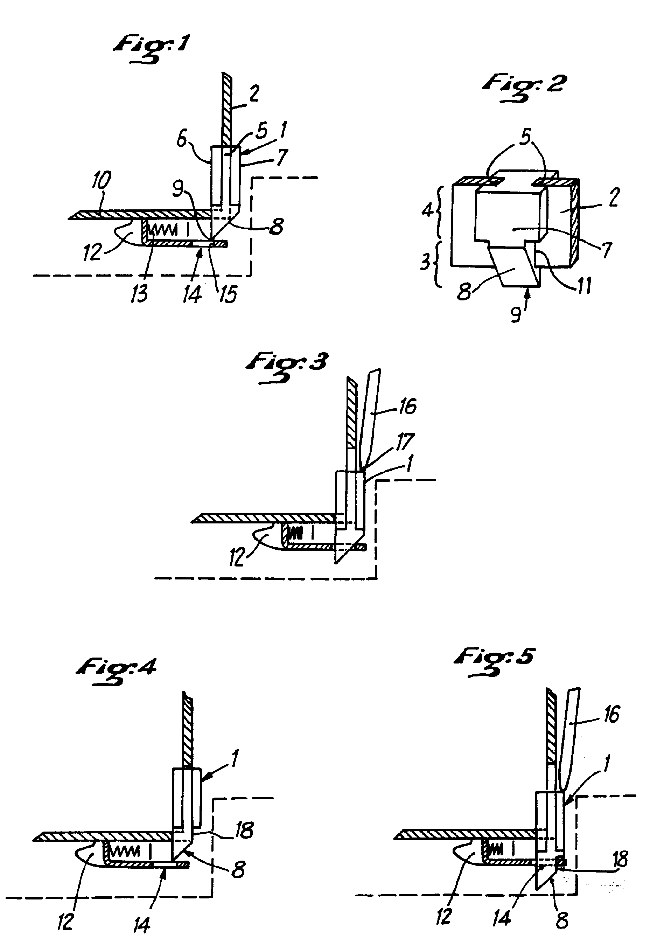

Le dispositif de manoeuvre (figures 1 et 2) est constitué d'un coulisseau 1 guidé en translation sur le côté 2 de l'appareil. Ce coulisseau 1 comprend deux parties de largeurs inégales, soit une partie étroite formant la partie active 3 du coulisseau 1 et une partie large 4 comportant latéralement un dispositif de coulissement composé d'une rainure 5 de chaque côté. La face arrière 6 du coulisseau 1 est plane tandis que sa face frontale 7 présente, dans la partie active 3 du coulisseau 1, une rampe 8 se terminant en arête 9 sur la face arrière 6 du coulisseau 1.

Dans ce mode de réalisation, le coulisseau 1 est guidé en translation sur le côté 2 de l'appareil. Celui-ci présente, à cet effet, une fente rectangulaire se prolongeant dans le base 10 dudit appareil. Les bords 11 de la fente, qui sont orthogonaux par rapport à la base 10, coopèrent avec les rainures latérales 5 du coulisseau 1 de façon à guider le coulissement de celui-ci.

Le dispositif de clipsage comprend un loquet 12 à ressort 13 qui présente, à sa partie tournée vers l'extérieur, un oeillet rectangulaire 14 (voir la figure 1). Cet oeillet 14 est agencé de façon que l'arête 9 du coulisseau 1 en position de repos soit sensiblement alignée avec le rebord intérieur 15 de l'oeillet 14 le plus éloigné du ressort 13 et, plus précisément, légèrement décalé à l'intérieur de l'oeillet 14. On comprend donc que lors de l'actionnement du coulisseau 1 en direction du loquet 12, la rampe 8 prendra appui sur ledit rebord 15 de l'oeillet 14 et provoquera, par effet de rampe, le déplacement du loquet 12 dans le sens de sa libération par rapport au rail de support (non représenté). Les dimensions de cet oeillet 14, l'inclinaison de la rampe 8 et sa longueur doivent être combinées ensemble de façon que le déplacement du loquet 12 soit suffisant pour provoquer ladite libération.

D'autre part, le mode de réalisation fait en sorte que l'extrémité du loquet 12 tournée vers l'extérieur est sensiblement alignée avec le côté 2 de l'appareil lors de son déplacement maximum vers l'extérieur.

La figure 3 montre une vue analogue à celle de la figure 1, le loquet étant en position de libération de l'appareil sous l'action du coulisseau lui-même actionné au moyen d'un outil approprié tel qu'un tournevis 16, appliquant une pression sur la face opposée à la partie active, qui forme, à cet effet, une face d'appui 17 saillant légèrement par rapport au côté de l'appareil.

Dans un mode de réalisation particulier de l'invention, représenté aux figures 4 et 5, le coulisseau 1 présente un épaulement formant une surface 18 qui est parallèle au côté 2 de l'appareil et qui se trouve en contact avec le rebord 15 de l'oeillet 14 lorsque le coulisseau 1 est en fin de course, le loquet 12 étant alors dégagé du rail de support. L'action du ressort de rappel 13 maintient le contact entre le rebord 15 et la surface 18, ce qui fait que le loquet 12 reste bloqué en position ouverte. La dépose de l'appareil électrique modulaire s'en trouve facilitée.

## Revendications

1. Dispositif de manoeuvre du mécanisme de clipsage des appareils électriques modulaires, mécanisme de clipsage qui est destiné à faciliter la mise en place desdits appareils sur un rail de support et leur retrait de ce rail et qui comporte un loquet (12) et un organe élastique de rappel tel qu'un ressort (13), dispositif caractérisé en ce qu'il comprend un coulisseau (1) qui est disposé au voisinage du côté (2) de l'appareil situé sensiblement à la perpendiculaire du loquet (12) et qui est mobile de façon orthogonale par rapport à la direction de déplacement du loquet (12), coulisseau (1) qui présente une partie active (3) agencée de façon à coopérer avec le loquet (12) par un dispositif à rampe (8) et à provoquer, contre l'action de ressort de rappel (13), un déplacement du loquet (12) dans le sens de sa libération par rapport au rail de support lorsque le coulisseau (1) est déplacé dans un sens convenable.

2. Dispositif selon la revendication 1, caractérisé en ce que le dispositif à rampe (8) vient coopérer avec une partie du loquet tournée vers l'extérieur et située sensiblement dans l'alignement du susdit côté (2) de l'appareil.

3. Dispositif selon la revendication 2, caractérisé en ce que le loquet présente un oeillet rectangulaire (14) destiné à coopérer avec le dispositif à rampe (8) du coulisseau (1), de façon à réaliser ledit effet de rampe.

4. Dispositif selon l'une des revendications 1 à 3, caractérisé en ce que le coulisseau (1) présente, à l'opposé de sa partie active (3), une face d'appui (17), de préférence légèrement saillante par rapport au côté (2) de l'appareil, destinée à recevoir la pression d'actionnement du coulisseau (1).

5. Dispositif selon l'une des revendications 1 à 4, caractérisé en ce que le coulisseau (1) présente, en fin de rampe (8), une surface (18) qui est orthogonale à la direction de déplacement du loquet (12) et qui est en contact avec l'oeillet (14) lorsque ledit loquet (12) est suffisamment dégagé du rail de support sous l'action dudit coulisseau 1, assurant ainsi le blocage en position ouverte.

## Patentansprüche

1. Vorrichtung zum Manövrieren des Klemmechanismus modularer elektrischer Geräte, mit einem Klemmechanismus, der das Aufsetzen der Geräte auf eine Halteschiene und das Abnehmen der Geräte von dieser Schiene erleichtert, und der eine Klinke (12) und ein elastisches Rückholorgan, wie eine Feder (13) beinhaltet, gekennzeichnet durch einen Schieber (1), der in der Nähe der Seite (2) des etwa senkrecht zur Klinke (12) befindlichen Gerätes angeordnet ist, und der im Verhältnis zur Bewegungseinrichtung der Klinke (12) orthogonal beweglich ist, hierbei wird der Schieber (1) einen aktiven Bereich (3), der so beschaffen ist, daß er mit der Klinke (12) über eine Vorrichtung mit Schräge (8) zusammenwirkt, und daß er gegen der Wirkung der Rückholfeder (13) eine Bewegung der Klinke (12) verursacht, bei der diese im Verhältnis zur Schiene freibeweglich wird, wenn der Schieber (1) in eine passende Richtung bewegt ist.

2. Vorrichtung nach Anspruch 1, dadurch gekennzeichnet, daß die Vorrichtung mit Schräge (8) mit einem nach außen gerichteten und etwa in gerader Ausrichtung zur Seite (2) des Gerätes angeordneten Teil der Klinke zusammenwirkt.

3. Vorrichtung nach Anspruch 2, dadurch gekennzeichnet, daß die Klinke eine rechteckige Öse (14) aufweist, die dazu bestimmt ist, mit der Vorrichtung mit Schräge (8) des Schiebers (1) zusammenwirken, um so den Effekt der Schräge zu erreichen.

4. Vorrichtung nach einem Anspruch von 1 bis 3 , dadurch gekennzeichnet, daß der Schieber (1) entgegengesetzt zu seinem aktiven Bereich (3) eine Abstützfläche (17) aufweist, die vorzugsweise leicht hervorgehoben ist im Verhältnis zur Geräteseite (2) und dazu bestimmt ist, den Druck zur Betätigung der Schiebers (1) aufzunehmen.

5. Vorrichtung nach einem der Ansprüche 1 bis 4, dadurch gekennzeichnet, daß der Schieber (1) am Ende der Schräge (8) eine Fläche (18) aufweist, die orthogonal zur Bewegungsrichtung der Klinke (12) liegt, und die in Kontakt mit der Öse (14) ist, wenn die Klinke (12) unter Einwirkung des Schiebers (1) ausreichend von der Halteschiene gelöst ist, so daß die Verriegelung in offener Stellung bewirkt wird.

## Claims

1. A device for operating the mechanism for the clip-mounting of modular electrical appliances, the said clip-mounting mechanism being intended to facilitate fitting the said appliances on a carrier rail and removing them from the said rail, and which comprises a latch (12) and a flexible restoring means such as a spring (13), the said device being characterised in that it comprises a sliding member (1) which is disposed close to that edge (2) of the appliance which is situated substantially at right-angles to the latch (12) and which is adapted for movement at right-angles to the direction of the displacement of the latch (12), said sliding member (1) having an active part (3) adapted to co-operate with the latch (12) via a ramp device (8) and to cause, against the action of the return spring (13), a displacement of the latch (12) in the sense of releasing it from the carrier rail when the sliding member (1) is displaced in the appropriate direction.

2. A device according to claim 1, characterised in that the ramp device (8) co-operates with an outwardly turned part of the latch and which is situated substantially in alignment with the aforesaid side (2) of the appliance.

3. A device according to claim 2, characterised in that the latch comprises a rectangular aperture (14) intended to co-operate with the ramp device (8) on the sliding member (1) in order to produce the said ramp effect.

4. A device according to one of claims 1 to 3, characterised in that the sliding member (1) has opposite its active part (3) a bearing face (17) which preferably projects slightly in respect of the side (2) of the appliance, intended to receive the actuating pressure of the sliding member (1).

5. A device according to one of claims 1 to 4, characterised in that the sliding member (1) has at the end of the ramp (8) a surface (18) which is at right-angles to the direction of displacement of the latch (12) and which is in contact with the aperture (14) when the said latch (12) is sufficiently clear from the carrier rail, following the action of the said sliding member (1), so ensuring that it is locked in the open position.
